# EUROPEAN PATENT APPLICATION

(11) **EP 1 172 055 A2**
(43) Date of publication of application: **16.01.2002**
(21) Application number: 01116610.5
(22) Date of filing: 11.07.2001
(51) Int. Cl.: A47J 31/40

(54) **Espresso coffee machine**

(30) Priority: 11.07.2000 IT TO000695
(71) Applicant: SGL Italia S.r.l., 10156 Torino (IT)
(72) Inventor: Cortese, Virginio, 10100 Torino (IT)
(74) Representative: Jorio, Paolo

(57) **Abstract**

An espresso coffee machine having an infusion station (2) for receiving a disposable filter defined by a cylindrical cartridge (3) containing at least one measure of ground coffee, and wherein the infusion station (2) has a track (30) along which cartridges (3) slide between a loading position (37) and an unloading position (38) via an infusion position (34); and two wheels (39) with lobes (41), mounted to rotate idly about respective axes (9) crosswise to the track (30) and on opposite sides of the track (30) at the infusion position (34), so as to define, between them and in the infusion position (34), a seat (43) for a cartridge (3).

## Description

The present invention relates to an espresso coffee machine having an infusion station for receiving a disposable filter defined by a cylindrical cartridge containing at least one measure of ground coffee or other infusible product.

In known machines of the above type, the infusion station is normally formed over a horizontal plate, in which is formed a track enabling the cartridges to slide from a loading position to an unloading position via a central infusion position.

To position a cartridge accurately in the infusion position, two jaws are used, which are located on opposite sides of the track and rotate about respective vertical axes, in opposition to respective springs, to define a releasable seat for housing a cartridge in the infusion position. A new cartridge is fed into the seat by feeding it along the track on to cam profiles carried by the jaws and so shaped that the new cartridge parts the jaws to engage the seat and pushes the old cartridge, if any, out into the unloading position, and the respective springs cause the jaws to grip the new cartridge.

The springs constitute one of the major drawbacks of known machines of the above type, by being located close to the infusion position where, being subjected continually to steam and ground coffee remains, they are easily jammed or damaged, thus disabling the machine.

It is an object of the present invention to provide an espresso coffee machine having an infusion station for receiving a disposable filter defined by a cylindrical cartridge, but designed to eliminate the aforementioned drawback.

According to the present invention, there is provided an espresso coffee machine having an infusion station for receiving a disposable filter defined by a cylindrical cartridge containing at least one measure of ground coffee, and wherein the infusion station comprises a track along which cartridges slide between a loading position and an unloading position via an infusion position; a discharge conduit located at said infusion position and for discharging an infusion; and locking means for locking a said cartridge releasably in said infusion position and over said discharge conduit; characterized in that said locking means comprise two wheels with lobes, mounted to rotate idly about respective axes of rotation crosswise to said track and on opposite sides of the track at said infusion position, so as to define, between them and in said infusion position, a cylindrical seat for said cartridge.

A non-limiting embodiment of the invention will be described by way of example with reference to the accompanying drawings, in which:
Figure 1 shows an axial section of a detail of a preferred embodiment of the machine according to the present invention;
Figure 2 shows a section along line II-II in Figure 1.

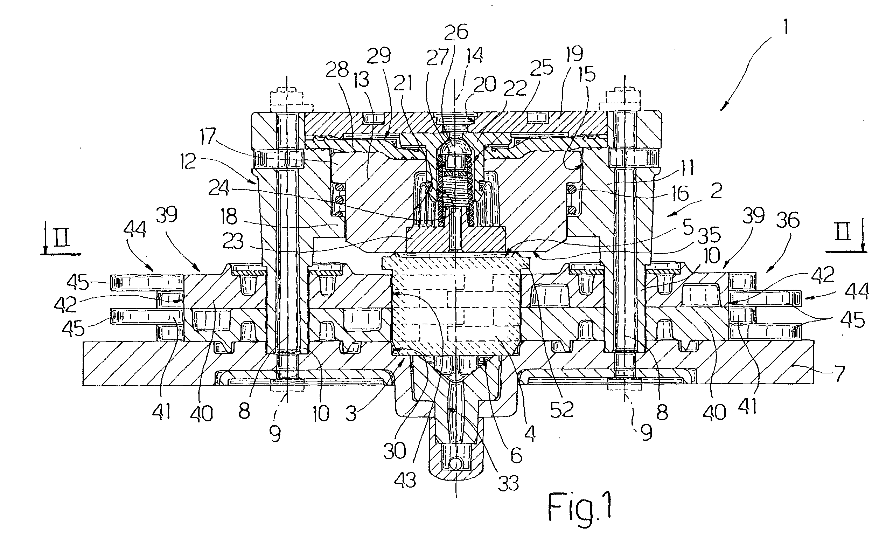

Number 1 in Figure 1 indicates as a whole an espresso coffee machine comprising an infusion station 2 for receiving a disposable filter defined by a rigid cartridge 3 containing at least one measure of ground coffee or other infusible product, and which is defined by a continuous cylindrical lateral wall 4 closed at the ends by two perforated flat walls 5 and 6.

Infusion station 2 comprises a flat bottom plate 7 having two through holes engaged by the bottom ends of two pins 8 having vertical axes 9 perpendicular to plate 7; and pins 8 are fitted with respective tubular uprights 10 coaxial with axes 9 and extending downwards from a cylindrical annular body 11 of a hydraulic cylinder 12 fitted to plate 7 by uprights 10.

Hydraulic cylinder 12 comprises a cylindrical piston 13, which has an axis 14 perpendicular to plate 7 and is movable towards plate 7 along a hole 15 inside annular body 11 and in opposition to a helical spring 16 compressed between a top outer flange 17 of piston 13 and a bottom inner flange 18 of annular body 11.

Hydraulic cylinder 12 also comprises a top cover plate 19 parallel to and facing plate 7 and fixed removably to the top ends of pins 8 projecting from the top of uprights 10 and annular body 11. A through hole 20 is formed through plate 19, is coaxial with axis 14, receives infusion liquid - in this case, hot water - from a known boiler (not shown) located over plate 19, and communicates with a hole 21 coaxial with axis 14 and formed through piston 13. Hole 21 is fitted inside with two tubular inserts 22 and 23, which click on to each other and define a through feed conduit 24 coaxial with axis 14 and controlled by a normally-closed valve 25 comprising a shutter 26 pushed on to a seat by a helical spring 27 compressed between inserts 22 and 23 and calibrated as explained later on.

Insert 22 comprises an outer flange located over piston 13 and which grips in fluidtight manner against piston 13 the inner periphery of an elastic annular membrane 28, the outer periphery of which is gripped in fluidtight manner between plate 19 and the top end of annular body 11 to define, with plate 19, a variable-volume chamber 29 communicating with hole 20.

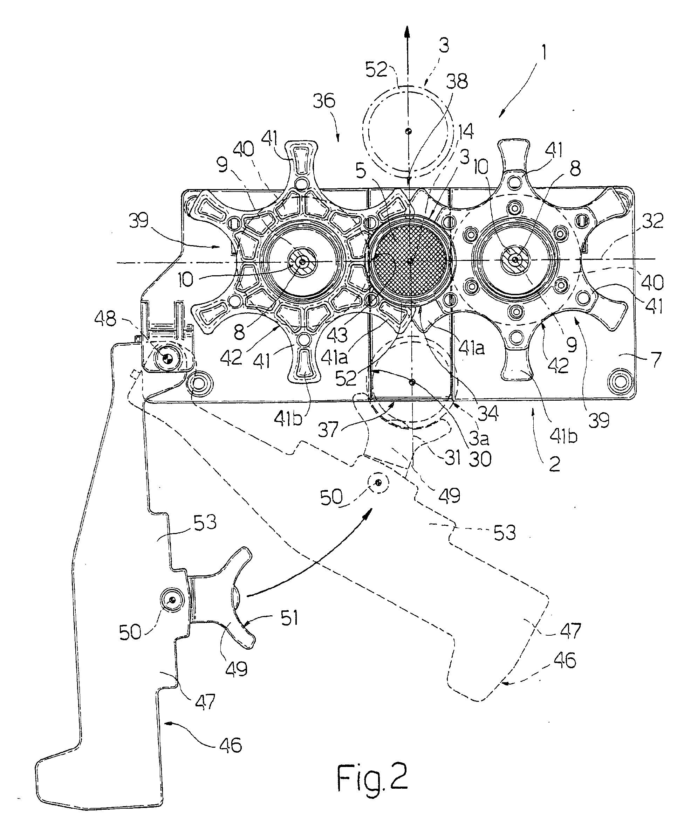

As shown in more detail in Figure 2, a depression is formed in the top surface of plate 7 to define a track 30 of a width approximately equal to but no less than the outside diameter of cylindrical lateral wall 4 of cartridge 3. Track 30 is straight, extends along an axis 31 perpendicular to axis 14 and to a line 32 joining axes 9 and perpendicular to axis 14, and is equidistant from axes 9. A discharge conduit 33, coaxial with axis 14, is formed through a bottom surface of track 30, and therefore through plate 7, and defines, on track 30, an infusion position 34. In infusion position 34 as shown in the accompanying drawings, cartridge 3 is coaxial with axis 14 and positioned with flat top wall 5 just beneath the bottom surface 35 of piston 13 and conduit 24, and with flat bottom wall 6 contacting the bottom surface of track 30 and directly over discharge conduit 33.

As shown in Figures 1 and 2, plate 7 is fitted on top with a locking device 36 by which a cartridge 3 is fed along track 30 from a loading position 37 located along an edge of plate 7 and at a distance from said infusion position 34 advantageously equal to over one and a half times the width of track 30, to enable the user to place a cartridge 3 stably straight on to a free initial portion of track 30. Locking device 36 also provides for locking cartridge 3 in infusion position 34, and for feeding cartridge 3 from infusion position 34 to an unloading position 38 located along the opposite edge of plate 7 to that of loading position 37, and at a distance from infusion position 34 advantageously equal to less than one and a half times the width of track 30, so that, as will be seen, the ejected cartridge 3 drops automatically from plate 7 at unloading position 38.

Locking device 36 comprises two wheels 39 located over plate 7, coplanar with each other, and substantially the same shape when viewed from above. Each wheel 39 is connected in rotary manner to a respective upright 10 to rotate idly about a respective axis 9, and comprises a circular central portion 40, and a number of lobes 41 extending radially outwards from central portion 40 and equally spaced about relative axis 9 of rotation. Each two adjacent lobes 41 on each wheel 39 define, between them, a substantially semicylindrical cavity 42 tangent to the outer periphery of relative central portion 40 and defining, when facing infusion position 34 and together with a corresponding cavity 42 on the other said wheel 39, a cylindrical seat 43 coaxial with axis 14 and of a diameter substantially equal to the width of track 30.

Each wheel 39 has an outside diameter greater than the distance between the two axes 9 of rotation, and each lobe 41 comprises an end portion, which interferes with a lobe 41 on the other wheel 39 and is defined by a comb 44, the teeth 45 of which are offset, in a direction parallel to axes 9 of rotation, with respect to the teeth 45 of end combs 44 of lobes 41 on the other wheel 39.

As shown in Figure 2, machine 1 comprises an external push device 46 for pushing a cartridge 3 along track 30 from a position adjacent to loading position 37 into said infusion position 34.

Push device 46 comprises a lever 47 hinged at one end to plate 7, alongside wheels 39 and on the loading position 37 side, and which is rotated manually, with respect to plate 7 and about an axis 48 parallel to axis 14, to and from infusion position 34. A central portion of lever 47 is fitted with a fork 49 facing track 30 and hinged to lever 47 to oscillate, with respect to lever 47, about an axis 50 parallel to axis 48. Fork 49 is located slightly higher than wheels 39, and comprises, on the opposite side to that facing lever 47, a cylindrical cavity 51 which cooperates with a top flange 52 of a cartridge 3 placed on an inlet portion of track 30.

As shown in Figure 2, axis 50 is located on a rectangular appendix 53 extending from lever 47 towards and parallel to plate 7, and of a given width as specified later on.

Operation of infusion station 2 will now be described with reference to Figure 2, and as of the instant in which chamber 29 (Figure 1) contains no pressurized infusion liquid, piston 13 (Figure 1) is maintained in the raised position by spring 16, and a used cartridge 3 is in infusion position 34 inside seat 43 defined by two corresponding pairs of lobes 41 of wheels 39 at infusion position 34.

As of the above condition, the user moves lever 47 into the open position (shown by the continuous line in Figure 2) in which lever 47 is substantially parallel to track 30, so as to gain access to loading position 37 of track 30. The user then places a new cartridge, indicated 3a, on the portion of track 30 adjacent to loading position 37 and left clear by lobes 41 of wheels 39, and pushes cartridge 3a into contact with the two lobes 41, indicated 41a, defining seat 43 on the side facing loading position 37.

The user then rotates lever 47 (anticlockwise in Figure 2) to move fork 49 into a position (indicated by the dash line in Figure 2) contacting flange 52 of cartridge 3a, and continues rotating lever 47 to feed cartridge 3a along track 30 into infusion position 34. In the course of the above movement, cartridge 3a acts on lobes 41a to rotate wheels 39 one step in opposite directions, so that lever 47 moves into the final closed position (not shown) parallel to line 32.

As it moves into the closed position, lever 47 opens the seat 43 facing unloading position 38, moves cartridge 3 past unloading position 38, forms another seat 43 enclosing cartridge 3a, and inserts appendix 53 accurately between the two lobes 41, indicated 41b, immediately upstream from lobes 41a in the rotation direction of wheels 39.

Since the width of appendix 53 is approximately equal to but no greater than the distance between the two lobes 41b when cartridge 3a is in infusion position 34, lever 47, when in the closed position, prevents any further rotation of wheels 39, which are only released when lever 47 is again moved into the open position. In short, appendix 53 defines a safety device for preventing further rotation of wheels 39 once cartridge 3a is in infusion position 34.

At this point, pressurized infusion liquid is allowed through hole 20 into chamber 29, moves piston 13 towards cartridge 3a so that surface 35 cooperates in fluidtight manner with flange 52 of cartridge 3a, and, immediately afterwards, opens valve 25, the spring 26 of which is so calibrated as only to be opened by the increase in pressure produced inside chamber 29 by piston 13 contacting cartridge 3a.

## Claims

1. An espresso coffee machine having an infusion station (2) for receiving a disposable filter defined by a cylindrical cartridge (3) containing at least one measure of ground coffee, and wherein the infusion station (2) comprises a track (30) along which cartridges (3) slide between a loading position (37) and an unloading position (38) via an infusion position (34); a discharge conduit (33) located at said infusion position (34) and for discharging an infusion; and locking means (36) for locking a said cartridge (3) releasably in said infusion position (34) and over said discharge conduit (33); **characterized in that** said locking means (36) comprise two wheels (39) with lobes (41), mounted to rotate idly about respective axes (9) of rotation crosswise to said track (30) and on opposite sides of the track (30) at said infusion position (34), so as to define, between them and in said infusion position (34), a cylindrical seat (43) for said cartridge (3).

2. A machine as claimed in Claim 1, wherein said infusion position (34) is separated from said unloading position (38) by a first distance equal to less than one and a half times a diameter of said cylindrical seat (43).

3. A machine as claimed in Claim 1 or 2, wherein said infusion position (34) is separated from said loading position (37) by a second distance equal to more than one and a half times a diameter of said cylindrical seat (43).

4. A machine as claimed in one of the foregoing Claims, wherein external push means (46) are provided to push a said cartridge (3) along said track (30) from said loading position (37) into said infusion position (34).

5. A machine as claimed in Claim 4, wherein safety means (53) are carried by said push means (46) to lock said two wheels (39) angularly and releasably, upon said two wheels reaching given angular positions defining said cylindrical seat (43).

6. A machine as claimed in any one of the foregoing Claims, wherein said axes (9) of rotation are separated by a distance greater than a width of said track (30), which extends perpendicularly to a line (32) joining said two axes (9) of rotation; said line (32) extending through said infusion position (34).

7. A machine as claimed in any one of the foregoing Claims, wherein each said wheel (39) comprises a circular central portion (40), and a number of lobes (41) extending radially outwards from said central portion (40) and equally spaced about the relative said axis (9) of rotation; each pair of adjacent lobes (41) on each said wheel (39) defining, between them, a substantially semicylindrical cavity (42) tangent to an outer periphery of said central portion (40) and defining, together with a corresponding cavity (42) on the other said wheel (39), said cylindrical seat (43).

8. A machine as claimed in Claim 7, wherein said wheels (39) are coplanar, are substantially identical when viewed from above, and have an outside diameter greater than a distance between said two axes (9) of rotation; each said lobe (41) having an end comb (44); and the combs (44) on one said wheel (39) being offset, in a direction parallel to said axes (9) of rotation, with respect to the combs (44) on the other wheel (39).

9. A machine as claimed in one of the foregoing Claims, and comprising a first plate (7), and two uprights (10) fixed to said first plate (7) and each extending from said first plate (7) coaxially with a respective said axis (9) of rotation; each said wheel (39) being fitted in rotary manner to a respective said upright (10); said track (30) extending, on said first plate (7), between said two uprights (10); and said discharge conduit (33) extending through said first plate (7).

10. A machine as claimed in Claim 9 and comprising a second plate (19) fixed to said uprights (10) and defining an end member for a hydraulic cylinder (12), which is fitted to said uprights (10) in a position facing said first plate (7), and comprises a piston (13) movable towards said cylindrical seat (43), in opposition to calibrated resisting elastic means (16) and by virtue of an infusion liquid fed through said second plate (19), so as to engage in fluidtight manner a cartridge (3) located on said first plate (7) and inside said cylindrical seat (43).

11. A machine as claimed in Claim 10, wherein a feed conduit (24) for said infusion liquid is formed axially through said piston (13); normally-closed control valve means (25) being located along said feed conduit (24); and said valve means (25) being opened by pressures of said infusion liquid greater than the pressures required to overcome said resisting elastic means (16).
